(19) Europäisches Patentamt
European Patent Office
Office européen des brevets

(11) **EP 3 046 281 B1**

(12) **EUROPEAN PATENT SPECIFICATION**

(45) Date of publication and mention
of the grant of the patent:
**14.11.2018 Bulletin 2018/46**

(51) Int Cl.:
***H04L 1/00*** *(2006.01)*        ***H04B 1/7097*** *(2011.01)*
***H04W 74/08*** *(2009.01)*      ***H04W 28/04*** *(2009.01)*

(21) Application number: **15151301.7**

(22) Date of filing: **15.01.2015**

(54) **Frequency offset based collision detection**

Frequenz-Offsetbasierte Kollisionserkennung

Détection de collision basée sur un décalage de fréquence

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.07.2016 Bulletin 2016/29**

(73) Proprietor: **Huawei Technologies Co., Ltd.
Longgang District
Shenzhen, Guangdong 518129 (CN)**

(72) Inventors:
• **Ezri, Doron**
**80992 Munich (DE)**
• **Shilo, Shimi**
**80992 Munich (DE)**
• **Weitzman, Avi**
**80992 Munich (DE)**
• **Klausner, Ohad**
**80992 Munich (DE)**
• **Ruan, Wei**
**80992 Munich (DE)**
• **Sun, Fuqing**
**80992 Munich (DE)**
• **Fan, Ronghu**
**80992 Munich (DE)**

(74) Representative: **Kreuz, Georg Maria
Huawei Technologies Duesseldorf GmbH
Riesstraße 25
80992 München (DE)**

(56) References cited:
**WO-A1-2008/145454**

• **ZHONGREN CAO ET AL: "Collision detection and
resolution via frequency offset estimation in
OFDM based wireless LAN environment",
PROCEEDINGS OF IASTED INTERNATIONAL
CONFERENCE ON WIRELESS AND OPTICAL
COMMUNICATIONS (WOC 2002), ACTA PRESS,
19 July 2002 (2002-07-19), pages 158-159,
XP009185260,**
• **ADITYA GUDIPATI ET AL: "AutoMAC", MOBILE
COMPUTING AND NETWORKING, ACM, 2 PENN
PLAZA, SUITE 701 NEW YORK NY 10121-0701
USA, 22 August 2012 (2012-08-22), pages 5-16,
XP058009199, DOI: 10.1145/2348543.2348548
ISBN: 978-1-4503-1159-5**
• **TIAN ZHOU ET AL: "A Fast Collision Detection
Algorithm in IEEE 802.11 through Physical Layer
SINR Monitoring", VEHICULAR TECHNOLOGY
CONFERENCE (VTC SPRING), 2011 IEEE 73RD,
IEEE, 15 May 2011 (2011-05-15), pages 1-5,
XP031896841, DOI:
10.1109/VETECS.2011.5956439 ISBN:
978-1-4244-8332-7**

**Description**

BACKGROUND

The present invention, in some embodiments thereof, relates to wireless communication and, more specifically, but not exclusively, to collision detection in wireless communication.

IEEE802.11x standard, also known as Wireless Fidelity (Wi-Fi) uses a multiple access method with Carrier Sense Multiple Access with Collision Avoidance (CSMA/CA) technology as an attempt to avoid collisions.

In this implementation, each Wi-Fi enabled device, also referred to as a station, senses whether a respective transmission channel is idle before transmitting. If the transmission channel, the medium, is sensed to be free for a distributed coordination function (DCF) inter-frame space (DIFS) time interval the transmission will follow. The same is true also for point coordination function (PCF). If the transmission channel is not busy, the Wi-Fi enabled device transmits data. If the medium is busy, the Wi-Fi enabled device backs-off a random number of slots, and then if the medium is not busy for a DIFS period, it can transmit. If during this back off time the channel becomes busy again, the station resumes the back off procedure once the channel is idle. If more than one Wi-Fi enabled device transmits simultaneously a collision occurs.

A collision may be one of two collision types:

An early collision - a collision occurring within the first symbols of the transmission, for example during an Orthogonal frequency-division multiplexing (OFDM) symbol and occurs when several Wi-Fi enabled devices starting transmission simultaneously, for example when finishing a count of a back off time together. Such a collision is more common in high-density scenarios.

A late collision - a collision occurring anywhere within a transmission after the first symbols. Such a collision occurs mainly due to a hidden Wi-Fi enabled device that does not sense other already transmitting Wi-Fi enabled devices. Such a collision may occur in non high-density scenarios, but it is not limited to these scenarios.

In most cases, when a collision occurs, none of the transmissions are decoded correctly by the recipient and all transmitting Wi-Fi enabled devices back off and retry. This reduces the system performance significantly.

The paper "Collision detection and resolution via frequency offset estimation in OFDM based wireless LAN environment", Zhongren Cao et Al., IASTED Conference, July 17-19 2002, Banff Canada, detects and resolves collisions in IEEE 802.11 WLANs using numerical methods to determine the involved transmitters through their respective carrier frequency offsets (see abstract and section 3).

SUMMARY

It is an object of the present invention to improve collision detection in a wireless network.

This is achieved by the subject matter of the independent claims. The dependent claims protect further implementation forms.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a flowchart of a method of for detecting collision in a wireless network by an analysis of a differential frequency shift, according to some embodiments of the present invention;

FIG. 2 is a schematic illustration of an apparatus used in a wireless network for collision detection, for example for implementing the method depicted in FIG. 1, according to some embodiments of the present invention;

FIG. 3 is a graph that shows performance results of implementing the method depicted in FIG. 1, according to some embodiments of the present invention.

DETAILED DESCRIPTION

The present invention, in some embodiments thereof, relates to wireless communication and, more specifically, but not exclusively, to collision detection in wireless communication.

According to some embodiments of the present invention, there are provided methods and apparatuses for collision detection in a wireless network based on a frequency shift analysis. In these embodiments, a sensing scheme in which a receiving side detects transmission signals transmitted simultaneously or about the same time and analyzes preamble symbols in the transmission signals to estimate frequency shifts. This allows calculating a differential frequency shift that is indicative of a present or an absence of a collision.

An apparatus may include a receiver to receive wirelessly a plurality of transmission signals and a processing unit that identifies a plurality of preamble symbols each in one of the transmission signals, computes a differential frequency shift between frequency shifts of the extracted preamble symbols, and detect a collision based on the differential frequency shift.

Collision detection is a very important feature of a wireless station (access point, router or client), enabling benefits as improving efficiency by using collision information for estimating a number of active network devices for optimizing parameters such as ECWmin.

In multipath transmission channels, multiple copies of the same signal are received (with a different delay and amplitude). The IEEE802.11x transmission channel model 'F' assumes maximal delay of 1.05 microseconds (usec), which is in the same order as that of an early collision. This means that even when a single Wi-Fi enabled device, also referred to herein as station, transmits, a receiver can get multiple copies of the same signal with a relatively large delay between them (same order delay as collision between multiple stations). The embodiments mentioned above and described below allow differentiating between early collisions (transmissions from several stations arriving almost simultaneously) and a single transmission experiencing multipath within less than 2usec. These embodiments use the fact that multiple copies, respective to multipath experienced by a single transmission, are received at the receiver with the same frequency shift. However, multiple transmissions, each respective to a different transmitting station, received simultaneously at a single receiver, will most likely arrive with a different frequency shift, resulting from the different local oscillators used by each of the transmitting stations.

Such differentiation is not possible when some collision detection solutions are applied. For example, one solution is Signal to Interference and Noise Ratio (SINR) estimation where SINR is estimated over several consecutive OFDM symbols, where a sudden change in the SINR is being looked for. It is assumed that though the dynamic range of the SINR does not change significantly, the mean of the SINR will change drastically when a collision occurs. Such a solution is suitable only when there is enough time and/or computational power to track the SINR. However, the SINR estimation is not suitable for detecting early collisions as early collisions occur within the first 2usec of the transmission which is less than a single OFDM symbol.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

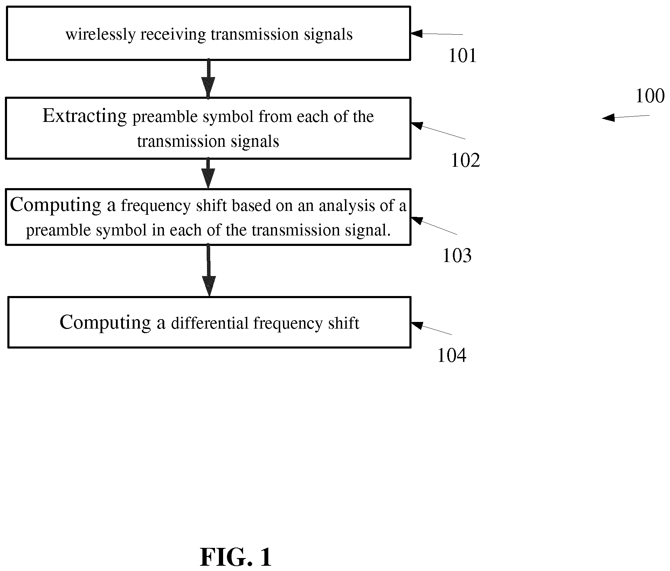

Reference is now made to FIG. 1, which is a flowchart of a method for detecting collision in a wireless network by an analysis of a difference between frequency shifts, according to some embodiments of the present invention. Each frequency shift is identified by analyzing a preamble symbol of a transmission signal. A preamble symbol may be an OFDM symbol, also referred to as an OFDM signal and/or a legacy short training field (L-STF) symbol identified in an L-STF field of the respective transmission signal. Optionally, the preamble symbol is a legacy long training field (L-LTF) symbol identified in an L-LTF field of the respective transmission signal.

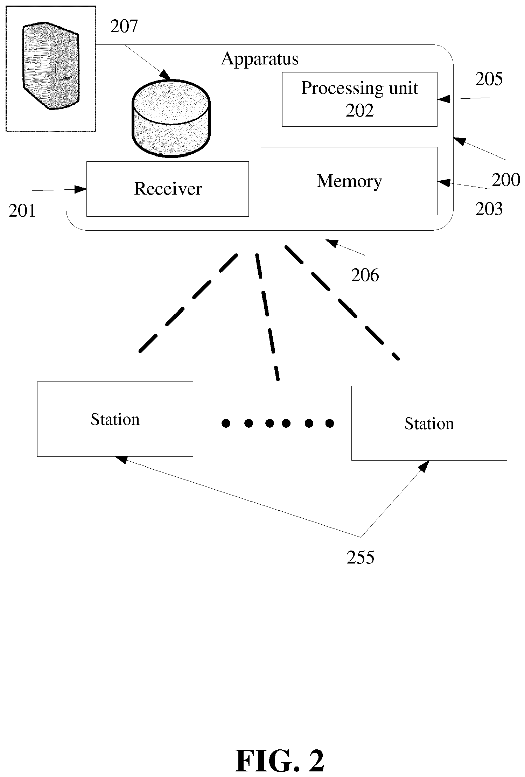

Reference is also made to FIG. 2, which is a schematic illustration of an apparatus used in a wireless network with a plurality of stations 255 for collision detection, for example for implementing the method depicted in FIG. 1, according to some embodiments of the present invention. The apparatus 200 comprises a receiver 201 that receives wirelessly one or more transmission signals and a processing unit 202 which is operated according to collision detection logic, for example as depicted in FIG. 1. The collision detection logic is optionally stored in a memory 203, for example in the firmware of the apparatus 200. The apparatus 200 is optionally an access point or a wireless router set to establish a local wireless local area network (WLAN) and to receive a plurality of transmission signals from a plurality of stations 205, for example as a Wi-Fi router, according to some embodiments of the present invention.

First, as shown at 101, transmission signal(s) are wirelessly received by the receiver 201. Then, as shown at 102, a signal analysis is applied by the processing unit 202 to identify preamble symbols. Optionally, when no preamble symbols are identified from a single analysis of the reception of the transmission signal(s), no collision is identified. When an appearance of at least one preamble symbol is identified in the signal analysis of the transmission signal(s) the analysis proceeds. If a number of preamble symbols are identified, the process of detecting collision proceeds.

Preamble symbol(s) may be detected as follows: First, a transmission signal is cross-correlated with a pre-stored signal or auto-correlated in order to identify whether it is a valid transmission signal, for instance an IEEE802.11x standard signal, for example to identify a presence of a preamble symbol, such as a Legacy STF part encoded in the preamble of the transmission signal. The correlation may be performed by a correlator module. The correlation is carried out in a time-domain or in frequency-domain. When such a validation fails and no preamble of a transmission signal is detected, the process may stop and no collision may be detected.

Then, peaks of the preamble symbol above a pre-defined threshold in the preamble field are identified. The result of the cross or auto correlation is compared with one or more pre-defined thresholds. Peaks above the threshold are designated as peaks corresponding to a preamble symbol of a valid transmission signal. As part of the reception (Rx) chain, these peaks may be classified as L-STF or L-LTF.

Now, presence or absence of preamble symbol(s) is identified by analyzing the peaks in the respective field. When the preamble symbol is L-STF (equivalent to the 802.11a or 802.11g short training OFDM symbol), transmitted by a single station without multipath at the output of a correlator module, where the correlation is carried out over 16 samples, the preamble symbol includes a peak every 16 samples (the entire L-STF is made up of 10 repetitions of 16 sample units). Multiple transmitting stations and/or multipath yield multiple peaks at the output of the correlator module. Peaks which are above the pre-defined threshold and spaced from one another by a multiple of 16 samples represent preamble symbols. Peaks which are spaced by a number of samples which is not a multiple of 16 samples represent multiple preamble symbols which may correspond to multipath or may correspond to multiple distinct transmitters. A series of peaks spaced from one another by a multiple of 16 samples represents a preamble symbol as described above. In the case of multipath or multiple distinct transmitters, a number of preamble symbols are identified at the output of the correlator.

As shown at 103, when a number of preamble symbols are detected, this allows the processing unit 202 to compute a frequency shift estimates or values each based on an analysis of the preamble symbol of a respective transmission signal. As shown at 104, this allows the processing unit 202 to compute a differential frequency shift between the frequency shifts.

The differential frequency shift is identified by comparing a difference between the frequency offset of peaks of each preamble symbol.

When the processing unit 202 detects a frequency shift that is similar in all transmission signals (respective to all replicas), the multitude of transmission signals are assumed to be an outcome of a multipath propagation. However, when the processing unit 202 analyzes preamble symbols belonging to different transmission signals and detects significantly different frequency shifts, the transmission signals are assumed to be originated from transmitters of different stations.

As indicated above, a frequency shift is computed per preamble symbol. The frequency shifts are then compared to identify a differential frequency shift. For example, the value of each shift in Hertz (Hz) is calculated (unit of frequency equal to one cycle per second) and compared. In another example, the value in percentage of subcarrier spacing is calculated.

As shown at 104, and based on an analysis of the differential frequency shift, a presence or an absence of an early collision is determined. If the difference is above a pre-defined threshold, then the preamble symbols are assumed as originated from transmission signals of different transmitters-i.e., a collision.

Reference is now made to an exemplary calculation of frequency shifts of two transmission signals and a differential frequency shift based thereupon. The differential frequency shift is a frequency difference between a frequency shift of a preamble symbol of the first transmission signal and a frequency shift of the preamble symbol of the second transmission signal.

In this calculation, $x(t)$ denotes a transmission signal transmitted by station #1 with frequency shift $\Delta f_1$ and is received at the receiver 201 of the apparatus 200 after a delay $\tau_1$. $x(t\text{-}\tau_1)e^{j2\pi\Delta f_1 t}$ denotes the received signal which corresponds with to station #1. $x(t)$ denotes a transmission signal transmitted by station #2 with frequency shift $\Delta f_2$ and is received at the receiver 201 of the apparatus 200 after a delay $\tau_2$. The total received signal is $y(t) = x(t\text{-}\tau_1)e^{j2\pi\Delta f_1 t} + x(t\text{-}\tau_2)e^{j2\pi\Delta f_2 t}$.

When $z = \tau_1\text{-}\tau_2$ is not a multiple of 16 samples, the delayed preamble symbols are almost orthogonal $x^*(t\text{-}\tau_1)x(t\text{-}\tau_2)\approx 0$, .The frequency shift $\Delta f_1$, is computed as follows:

$$\int_{t=0}^{T} x^*(t-\tau_1)y(t)dt \approx \int_{t=0}^{T} e^{j2\pi\Delta f_i t}dt = Te^{j\pi\Delta f_i T}\text{sinc}(\pi\Delta f_1 T).$$

For the $i^{th}$ transmitted preamble symbol, the received signal is multiplied with an L-STF signal delayed by $\tau_i$ and then integrated. The frequency shift may be computed using the angle of a complex valued scalar resulting from the integral. When the difference between the frequency shift estimates is above a pre-defined threshold, it is assumed that the preamble symbols based on which these frequency shift estimates or values have been calculated are of different transmission signals belonging to different transmitters of different stations and hence a collision is detected.

Optionally, when the analysis is not indicative of an early collision, it is assumed that the signal underwent a multipath channel. Such information is also important for the MAC layer.

The process is optionally continuously applied during the operation of the apparatus 200, allowing the detection of early collisions which occur when several stations transmit simultaneously or almost simultaneously. This detection is of collisions which occur at the beginning of the transmission (within the Legacy Short Training Field (L-STF) field of the Legacy preamble). The process allows detecting early collisions regardless of a frame decoding success even in cases where one of the colliding station's signals is strong enough to be correctly decoded. After the detection, reception and/or station transmission may be adapted to avoid further collisions, for example by instructing one of the stations to retransmit after a delay.

Optionally, collision detection is used for updating rate, for instance as an input to a rate adaptation, SAS, Backoff etc. algorithm. In such a manner, packet dropping due to the collision can be treated differently from packet dropping due to noise and/or channel conditions. Optionally, collision detection is used for adopting the parameters of the system such as backoff parameters (ECWmin, ECWmax, etc.), which directly affects the number of collisions.

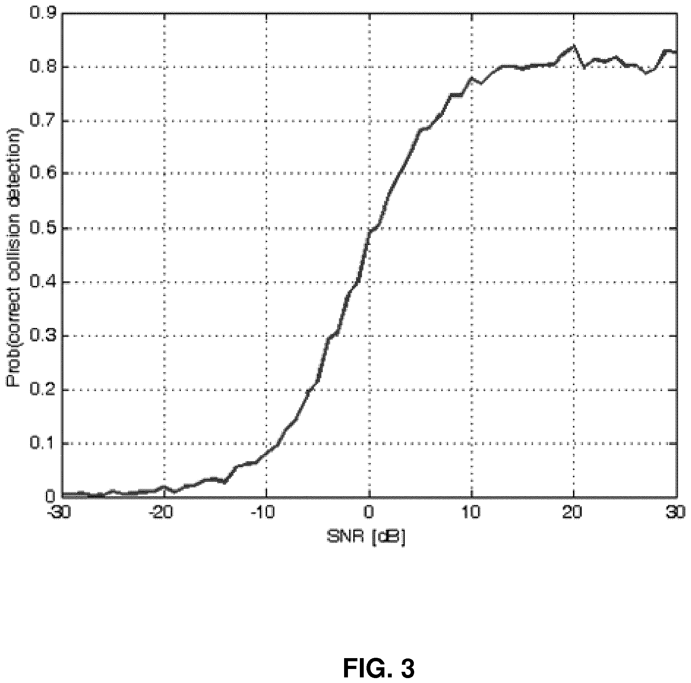

FIG. 3 is a graph that shows performance results of implementing the above described method, assuming collision between two stations occurs where amplitude of each station is a uniform random variable and delay is uniformly distributed. As shown in the graph, there is a very high detection probability at a practical SNR, above 70%. This means that using the above described method most of the collisions may be detected and the performances are significantly enhanced.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the appended claims.

The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant systems and methods will be developed and the scope of the terms compiler, low-level language, and distributed execution environment are intended to include all such new technologies a priori.

As used herein the term "about" refers to $\pm$ 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

**Claims**

1. An apparatus for collision detection in a wireless network, comprising:

   a receiver adapted to receive wirelessly a plurality of transmission signals; and

   a processing unit adapted to:

   identify a plurality of preamble symbols, by correlating the plurality of received signals with a pre-stored signal and obtaining a series of correlation peaks for each identified preamble symbol; compute a differential frequency shift between frequency shifts of two of said plurality of identified preamble symbols, and detect a collision based on said differential frequency shift.

2. The apparatus of claim 1, wherein said preamble symbol is a plurality of peaks spaced from one another by a multiple of 16 samples.

3. The apparatus of any of the previous claims, wherein said processor is adapted to determine when said plurality of preamble symbols are an outcome of a multipath propagation based on said differential frequency shift.

4. The apparatus of any of the previous claims, wherein said plurality of preamble symbols are generated according to any IEEE802.11 standard.

5. The apparatus of any of the previous claims, wherein each one of said plurality of preamble symbols is a Legacy short-training field.

6. The apparatus of any of the previous claims, wherein each one of said plurality of preamble symbols is a Legacy Long Training Field (L-LTF).

7. The apparatus of any of the previous claims, wherein said processor is adapted to compute said differential frequency shift by computing a plurality of frequency shifts respective to each of one of said plurality of extracted preamble symbols and comparing values of said plurality of frequency shifts to identify a differential frequency shift.

8. The apparatus of any of the previous claims, wherein said processor is adapted to compute said differential frequency shift by computing a difference between delays of a plurality of transmission signals comprising said plurality of preamble symbols.

9. A method for collision detection in a wireless network, comprising:

extracting a plurality of preamble symbols from a reception of at least one wireless transmission by correlating the received signal with a pre-stored signal and obtaining a series of correlation peaks for each identified preamble symbol;
computing a differential frequency shift between frequency shifts of two of said plurality of extracted preamble symbols; and
detecting a collision in response to an analysis of said differential frequency shift.

10. The method of claim 9, wherein said computing comprises:

identifying signal peaks above a threshold in said plurality of preamble symbols:

identifying said plurality of extracted preamble symbols based on an analysis of said signal peaks.

11. The method of claim 10, wherein said computing further comprises:

identifying a position of said signal peaks in each of said plurality of preamble symbols;
wherein said plurality of extracted preamble symbols are identified based on an analysis of said position of said signal peaks.

12. A computer program that performs one of the previous methods when executed on a computer.

**Patentansprüche**

1. Vorrichtung zur Kollisionsdetektion in einem Drahtlosnetzwerk, umfassend:

einen Empfänger, der ausgelegt ist zum drahtlosen Empfangen mehrerer Übertragungssignale; und
eine Verarbeitungseinheit, die zu Folgendem ausgelegt ist:

Identifizieren mehrerer Präambelsymbole durch Korrelieren der mehreren empfangenen Signale mit einem vorgespeicherten Signal und Erhalten einer Reihe von Korrelationsspitzen für jedes identifizierte Präambelsymbol;
Berechnen einer differenziellen Frequenzverschiebung zwischen Frequenzverschiebungen von zwei der mehreren identifizierten Präambelsymbole, und
Detektieren einer Kollision basierend auf der differenziellen Frequenzverschiebung.

2. Vorrichtung nach Anspruch 1, wobei das Präambelsymbol mehrere Spitzen ist, die um ein Vielfaches von 16 Abtastungen voneinander beabstandet sind.

3. Vorrichtung nach einem der vorangegangenen Ansprüche, wobei der Prozessor ausgelegt ist zum Bestimmen, wann die mehreren Präambelsymbole ein Resultat einer Mehrwegausbreitung sind, basierend auf der differenziellen Frequenzverschiebung.

4. Vorrichtung nach einem der vorangegangenen Ansprüche, wobei die mehreren Präambelsymbole gemäß einem beliebigen IEEE802.11-Standard erzeugt werden.

**5.** Vorrichtung nach einem der vorangegangenen Ansprüche, wobei jedes der mehreren Präambelsymbole ein Alt-Kurztrainingsfeld ist.

**6.** Vorrichtung nach einem der vorangegangenen Ansprüche, wobei jedes der mehreren Präambelsymbole ein Alt-Langtrainingsfeld (L-LTF) ist.

**7.** Vorrichtung nach einem der vorangegangenen Ansprüche, wobei der Prozessor ausgelegt ist zum Berechnen der differenziellen Frequenzverschiebung durch Berechnen mehrerer Frequenzverschiebungen bezüglich jedem der mehreren extrahierten Präambelsymbole und Vergleichen von Werten der mehreren Frequenzverschiebungen, um eine differenzielle Frequenzverschiebung zu identifizieren.

**8.** Vorrichtung nach einem der vorangegangenen Ansprüche, wobei der Prozessor ausgelegt ist zum Berechnen der differenziellen Frequenzverschiebung durch Berechnen einer Differenz zwischen Verzögerungen mehrerer Übertragungssignale, die die mehreren Präambelsymbole umfassen.

**9.** Verfahren zur Kollisionsdetektion in einem Drahtlosnetzwerk, umfassend:

Extrahieren mehrerer Präambelsymbole aus einem Empfang von mindestens einer drahtlosen Übertragung durch Korrelieren des empfangenen Signals mit einem vorgespeicherten Signal und Erhalten einer Reihe von Korrelationsspitzen für jedes identifizierte Präambelsymbol;
Berechnen einer differenziellen Frequenzverschiebung zwischen Frequenzverschiebungen von zwei der mehreren extrahierten Präambelsymbolen; und
Detektieren einer Kollision als Reaktion auf eine Analyse der differenziellen Frequenzverschiebung.

**10.** Verfahren nach Anspruch 9, wobei das Berechnen Folgendes umfasst:

Identifizieren von Signalspitzen über einer Schwelle in den mehreren Präambelsymbolen:

Identifizieren der mehreren extrahierten Präambelsymbole basierend auf einer Analyse der Signalspitzen.

**11.** Verfahren nach Anspruch 10, wobei das Berechnen ferner Folgendes umfasst:

Identifizieren einer Position der Signalspitzen in jedem der mehreren Präambelsymbole;
wobei die mehreren extrahierten Präambelsymbole basierend auf einer Analyse der Position der Signalspitzen identifiziert werden.

**12.** Computerprogramm, das eines der vorherigen Verfahren durchführt, wenn es auf einem Computer ausgeführt wird.

**Revendications**

**1.** Appareil de détection de collision dans un réseau sans fil, comprenant :

un récepteur conçu pour recevoir sans fil une pluralité de signaux de transmission ; et une unité de traitement conçue pour :

identifier une pluralité de symboles de préambule, en corrélant la pluralité de signaux reçus à un signal stocké au préalable, et en obtenant une série de pics de corrélation pour chaque symbole de préambule identifié ;
calculer un déplacement de fréquence différentiel entre des déplacements de fréquence de deux symboles de préambule de ladite pluralité de symboles de préambule identifiés ; et
détecter une collision sur la base dudit déplacement de fréquence différentiel.

**2.** Appareil selon la revendication 1, dans lequel ledit symbole de préambule est une pluralité de pics espacés les uns des autres par un multiple de 16 échantillons.

**3.** Appareil selon l'une quelconque des revendications précédentes, dans lequel ledit processeur est conçu pour déterminer quand ladite pluralité de symboles de préambule est un résultat d'une propagation par trajets multiples basée sur ledit déplacement de fréquence différentiel.

4. Appareil selon l'une quelconque des revendications précédentes, dans lequel ladite pluralité de symboles de préambule est générée selon n'importe quelle norme IEEE 802.11.

5. Appareil selon l'une quelconque des revendications précédentes, dans lequel chaque symbole de préambule de ladite pluralité de symboles de préambule est un ancien champ d'apprentissage court.

6. Appareil selon l'une quelconque des revendications précédentes, dans lequel chaque symbole de préambule de ladite pluralité de symboles de préambule est un ancien champ d'apprentissage long (L-LTF).

7. Appareil selon l'une quelconque des revendications précédentes, dans lequel ledit processeur est conçu pour calculer ledit déplacement de fréquence différentiel en calculant une pluralité de déplacements de fréquence en fonction de chaque symbole de préambule de ladite pluralité de symboles de préambule extraits, et en comparant des valeurs de ladite pluralité de déplacements de fréquence pour identifier un déplacement de fréquence différentiel.

8. Appareil selon l'une quelconque des revendications précédentes, dans lequel ledit processeur est conçu pour calculer ledit déplacement de fréquence différentiel en calculant une différence entre des retards d'une pluralité de signaux de transmission comprenant ladite pluralité de symboles de préambule.

9. Procédé de détection de collision dans un réseau sans fil, consistant à :

   extraire une pluralité de symboles de préambule à partir d'une réception d'au moins une transmission sans fil, en corrélant le signal reçu à un signal stocké au préalable, et en obtenant une série de pics de corrélation pour chaque symbole de préambule identifié ;
   calculer un déplacement de fréquence différentiel entre des déplacements de fréquence de deux symboles de préambule de ladite pluralité de symboles de préambule extraits ; et
   détecter une collision en réponse à une analyse dudit déplacement de fréquence différentiel.

10. Procédé selon la revendication 9, dans lequel ledit calcul consiste à :

   identifier des pics de signal au-dessus d'un seuil dans ladite pluralité de symboles de préambule ;
   identifier ladite pluralité de symboles de préambule extraits sur la base d'une analyse desdits pics de signal.

11. Procédé selon la revendication 10, dans lequel ledit calcul consiste en outre à :

   identifier une position desdits pics de signal dans chaque symbole de préambule de ladite pluralité de symboles de préambule ;
   ladite pluralité de symboles de préambule extraits étant identifiée sur la base d'une analyse de ladite position desdits pics de signal.

12. Programme informatique qui réalise un des procédés précédents lorsqu'il est exécuté sur un ordinateur.

```
┌─────────────────────────────────────────┐
│   wirelessly receiving transmission signals   │◀─────
└─────────────────────────────────────────┘        101
                     │
                     ▼
┌─────────────────────────────────────────┐
│   Extracting preamble symbol from each of the  │◀─────          100
│          transmission signals           │                 ◀──
└─────────────────────────────────────────┘        102
                     │
                     ▼
┌─────────────────────────────────────────┐
│ Computing a frequency shift based on an analysis of a │◀─────
│  preamble symbol in each of the transmission signal.  │
└─────────────────────────────────────────┘        103
                     │
                     ▼
┌─────────────────────────────────────────┐
│   Computing a differential frequency shift     │◀─────
└─────────────────────────────────────────┘        104
```

FIG. 1

207

Apparatus

Processing unit
202

205

Receiver

Memory

201

200

203

206

Station

• • • • • •

Station

255

**FIG. 2**

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ZHONGREN CAO et al.** Collision detection and resolution via frequency offset estimation in OFDM based wireless LAN environment. *IASTED Conference,* 17 July 2002